# EUROPEAN PATENT SPECIFICATION

(11) **EP 0 472 287 B1**
(45) Date of publication and mention of the grant of the patent: **21.02.1996**
(21) Application number: 91306576.9
(22) Date of filing: 19.07.1991
(51) Int. Cl.: F16J 15/34, F16J 15/40

(54) **Mechanical face seals**
Gleitringdichtung
Garniture étanche à anneau glissant

(30) Priority: 23.08.1990 GB 9018548
(43) Date of publication of application: 26.02.1992
(73) Proprietor: JOHN CRANE UK LIMITED, Slough, Berkshire SL1 4QX (GB)
(72) Inventor: Wichall, Colin Arthur, Hayling Island, Hampshire (GB)
(74) Representative: Watts, Peter Graham

(56) References cited:
- EP-A- 0 097 802
- EP-A- 0 191 895
- EP-A- 0 220 531
- DE-A- 3 619 489
- DE-B- 2 558 651

## Description

The present invention relates to mechanical face seals.

In a mechanical face seal, a pair of seal face members, one associated with a rotary component and the other associated with a stationary component, are urged axially together into sealing engagement.

The "closing force" urging the seal face members into engagement is usually generated by a combination of a permanent biasing means, for example a spring element, and hydraulic loading from the fluid being sealed, the latter varying with fluid pressure.

In order to improve wear of the sealing faces and reduce heat generation, seals are designed to operate with a film of fluid between the sealing faces. This film of fluid normally resulting from a combination of static and dynamic pressure gradients across the seal interface. Methods have been used for enhancing the generation of a fluid film at the seal interface, for example the sealing faces may be cut away radially to promote penetration by the fluid being sealed. However, the approaches generally adopted are dependent upon seal motion to generate interface lubrication via the fluid film.

This approach becomes unsatisfactory where the pressure in the fluid being sealed falls to or below atmospheric pressure and fluid penetration between the faces reduces or is destroyed by air being drawn across the seal interface. It is also unsatisfactory where abrasive debris are present in the fluid causing destruction of the interface surfaces resulting in premature wear. Particular problems also arise at start-up where, for example, in a pump seal low seal motion and low fluid pressure will provide poor lubrication.

It has been proposed to provide lubrication by feeding fluid into the interface from an external source, for example a static header tank as disclosed in DE-A-3,619,489. This overcomes many of the problems, for example lubrication at start-up and the presence of abrasive debris in the fluid film. However, no account has been taken hitherto of variations in the pressure of the fluid being sealed and consequently while this method would ensure that some lubrication is provided at all times, the effectiveness of the fluid film will vary with the local environment of the seal.

EP-A-220,531 discloses a hydrostatic seal in which the fluid film thickness is controlled by increasing or decreasing the convergence of the sealing faces. Means is provided to monitor the effectiveness of the fluid film and control electromechanical means which acts upon one of the seal face members, to deform the sealing face thereof and increase or decrease the convergence between the sealing faces.

The present invention provides means of ensuring that the fluid film characteristics of the seal are optimised for the working conditions of the seal.

According to one aspect of the present invention a mechanical face seal for providing a fluid tight seal between a pair of relatively rotatable components comprises a first seal face member mounted in fixed axial and rotational relationship and sealed with respect to one of the components and a second seal face member mounted in fixed rotational relationship and sealed with respect to the other component, the second seal face member being movable axially towards the first seal face member so that opposed sealing faces of the first and second seal face members are urged into sealing engagement, a passage being provided through one of the seal face members, said passage opening to the sealing face of that seal face member at a point intermediate of the radial extremities of the face engaged by the sealing face of the other seal face member, the passage being connected to an external source of fluid under pressure, means being provided for monitoring operating conditions at the interface between the first and second seal face members and means for adjusting the pressure of fluid delivered via the passage to the sealing faces, to optimise the performance of the seal.

According to one embodiment of the invention the pressures of the fluid delivered to the interface of the sealing faces and the pressure of the sealed fluid are monitored, and the pressure of fluid delivered to the interface controlled in response to variations in the pressure of the sealed fluid, so that the fluid film at the interface may be maintained to provide optimum lubrication of the sealing faces. Alternatively or in addition, the temperature of the sealing faces may be monitored to provide a measure of the effectiveness of the lubrication provided by the fluid film, the pressure of fluid delivered to the interface being adjusted to increase or decrease the effectiveness of the fluid film, as required. Other parameters that may be monitored to control the pressure of fluid delivered to the interface may include speed of rotation, seal leakage and/or wear of the sealing faces.

The invention is now described, by way of example only, with reference to the accompanying drawings, in which:-
Figure 1 shows a part sectional elevation of a seal formed in accordance with the present invention;
Figure 2 shows a sectional elevation along the line I-I of Figure 1;
Figure 3 shows a part sectional side elevation of an alternative form of seal formed in accordance with the present invention; and
Figure 4 illustrates an alternative form of control system for use with seals of the type illustrated in Figures 1 and 3.

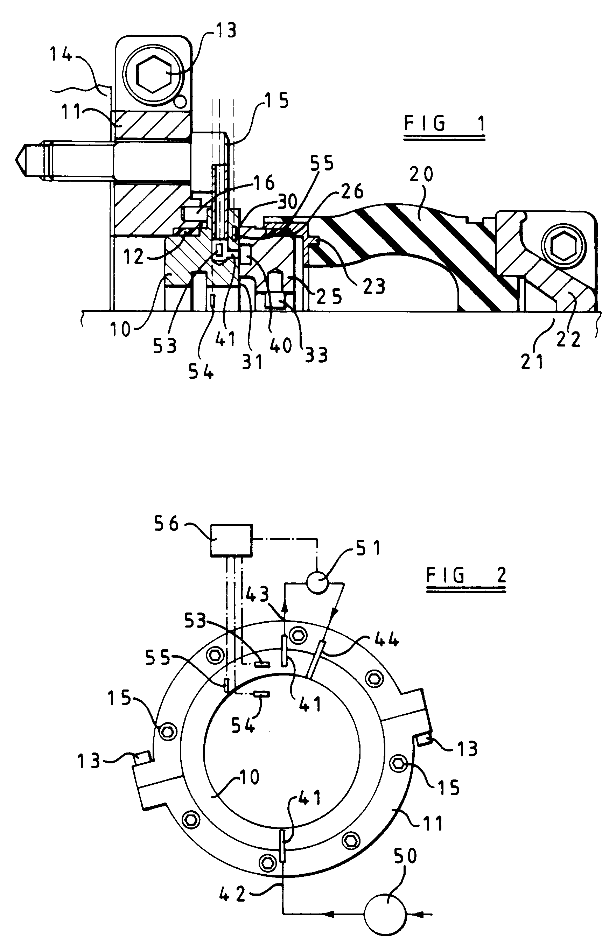

As illustrated in Figures 1 and 2, a seal includes a first seal face member or seat 10 which is located on the internal diameter of the seat housing 11 and is sealed with respect thereto by means of an elastomeric sealing strip 12. The seat housing 11 is formed in two parts which are secured together to clamp about the seat 10, by means of bolts 13. The seat housing 11 is bolted to a pump housing 14 by means of a series of angularly spaced bolts 15, with the seat 10 outermost. A pair of pins 16 (only one shown) engage in bores in the seat housing 11 and engage complementary formations on the seat 10 to prevent relative rotation therebetween.

Externally of the housing 14, an elastomeric bush 20 is mounted on a shaft 21 for rotation therewith, by clamping ring 22. The bush 20 extends from the clamping ring 22 towards seat 10 and the end of the bush 20 adjacent seat 10 is provided with a metal retaining ring 23, with which it makes sealing engagement. The second seal face member 25 is located in the retaining ring 23 and sealed with respect thereto by means of a sealing strip 26.

The bush 20 is located on the shaft 21 such that under normal operation, it will be under compression when face 30 of the seal face member 25 engages the opposed face 31 of seat 10, the bush 20 thereby imposing a resilient load biasing faces 30 and 31 into sealing engagement. A series of angularly spaced dowels 33 are provided on the internal diameter of seal face member 25 and extend into close proximity with the shaft 21, in order to centralise the seal face member 25 on the shaft 21 without inhibiting the relative axial movement therebetween, so that the seal face member 25 may move axially to accommodate wear of the faces 30 and 31 and to allow the formation of a lubricating fluid film therebetween.

An annular groove 40 is provided in the face 30 intermediate of the extremities thereof engaged by the face 31. A pair of diametrically opposed passages 41 are provided through the seat 10, the passages 41 extending from the outer diameter of the seat 10 and opening to the face 31 in radial alignment with the annular groove 40. An inlet 42 is provided to one of the passages 41 and an outlet 43 from the other. A further passage 44 is provided extending radially through the seat 10 from its outer diameter to its inner diameter.

The inlet 42 is connected to a source 50 of fluid under pressure, which may, for example, be a tapping from the pump outlet, a boost pump or mains water supply. The outlet 43 is connected via a pressure control valve 51 to passage 44. Fluid may thus be injected through inlet 42 to the faces 30 and 31, sufficient back pressure being provided by the fluid control valve 51 to produce a fluid film between the faces 30 and 31. Fluid passing from outlet 43 through the fluid control valve 51 and passage 44, will flush the internal surface of the seal and assist in cooling of the seat 10 and seal face member 25.

Pressure sensing means 53 and 54 are provided to monitor the pressure of injected fluid at the interface between seat 10 and seal face member 25 and the pressure of the sealed fluid within the housing 14, respectively. Also, a temperature sensor 55 may optionally be provided on the seat 10 to measure the temperature generated at faces 30 and 31.

Signals from the pressure sensors 53 and 54 are fed to an electronic control unit 56, which controls the valve 51 so that the pressure at the interface between seat 10 and seal face member 25 may be adjusted with variations in the pressure within the housing 14, so that the fluid film produced between faces 30 and 31 may be optimised for the working conditions of the seal. The temperature sensor 55, if fitted, will also give an indication of the effectiveness of lubrication afforded by the fluid film, which may also be taken into account in controlling the fluid film.

The seal described above will thus permit accurate control of the fluid film between the faces of the seat 10 and seal face member 25 under all operating conditions of the seal. The consequent improvement in lubrication and cooling of the sealing faces will reduce wear thereof and prolong the life of the seal. Using this system, the formation of the fluid film is not dependent on seal movement or the pressure of fluid sealed and, for example, a fluid film may be generated under start-up conditions. As a result of the improved lubrication, the seal face members may be made of materials which were hitherto considered unsuitable for such applications. Furthermore, with this seal arrangement clean fluid may be injected between the seal faces thereby avoiding the problem of abrasive contaminants. Even where fluid is tapped off from the pump outlet, this may be filtered before injecting between the seal faces.

Figure 3 illustrates an externally pressurised seal. In this seal, a seat 110 is located on the internal diameter of a seal housing 111 and is sealed with respect thereto by means of a sealing strip 112, in similar manner to that described with reference to Figures 1 and 2. The seal housing 111 is however secured to housing 114 with seat 110 innermost.

A seal face member 125 is mounted within a retaining ring 126 and sealed with respect thereto by means of a elastomeric sealing strip 129. The retaining ring 126 is slidably mounted upon a collar 127 which is secured on shaft 121 by means of clamping ring 122. The retaining ring 126 is sealed with respect to collar 127 by means of sealing ring 128. A plurality of angularly spaced axially extending pins 130 are located on an internal flange formation 131 on retaining ring 126, the pins 130 engaging at one end in bores 132 in the seal face member 125 and at the other end in bores 133 in the retaining ring 126, so as to prevent relative rotation between the seal face member 125, retaining ring 126 and shaft 121. A series of compression springs 135 are located in axial extending bores 136 in collar 127 at angularly spaced locations intermediate of the pins 130. The springs 135 act between the ends of bores 136 and the flange formation 131, to urge the retaining ring 126 and seal face member 125 towards the seat 110 and face 140 of seal face member 125 into engagement with face 141 of seat 110.

An annular groove 150 is provided in face 140 of seal face member 125. An axial passage 151 extends through seat 110 from face 141 to an annular groove 152. The annular groove 152 is closed by the internal diameter of the seat housing 111 and an inlet 153 is provided through the seat housing 111 to groove 152. The inlet 153 is connected to a controllable pressure source 160 from which fluid may be supplied to the interface between seat 110 and seal face member 125 to provide a fluid film between faces 140 and 141. Pressure sensors 161 and 162 are provided to monitor the pressure of fluid at the interface between the seat 110 and seal face member 125 and the pressure of fluid within housing 114, respectively. Signals from the pressure sensors 161 and 162 are fed to electronic control unit 163 which controls the pressure source 160. The pressure of fluid supplied from pressure source 160 may thereby be controlled in response to variation in pressure within the housing 114, in order to optimise the fluid film generated between face 140 and 141.

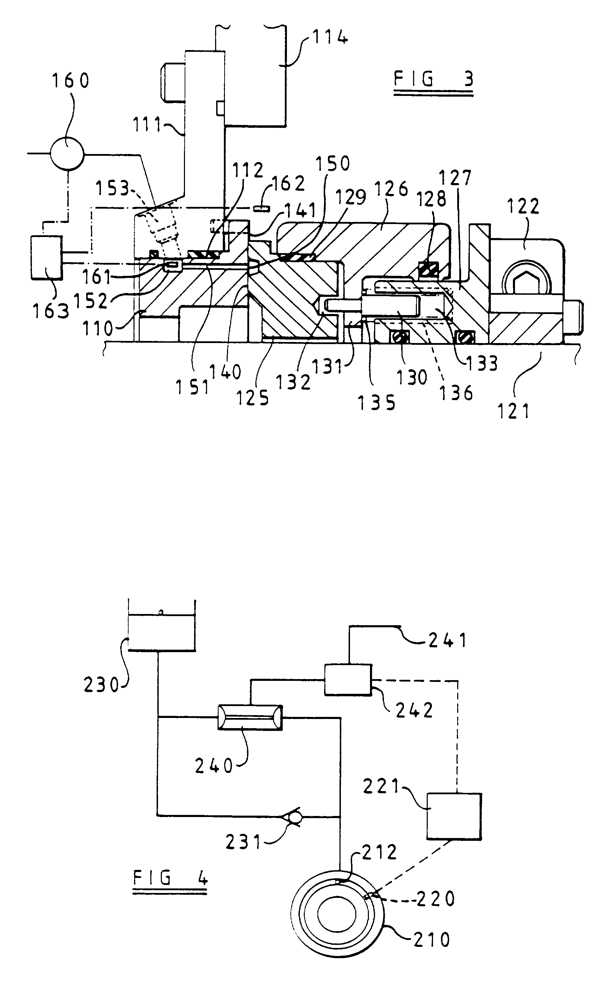

In the system illustrated in Figure 4 a temperature sensor 220 is mounted in the seat 210 adjacent the sealing face thereof. The sensor 220 is connected to an electronic control module 221 and produces an analogue signal proportional to the temperature of the seal interface.

A passage 212 is provided through a seat 210 and leads to the interface between the seal face members in similar manner to that described above with reference to Figures 1 and 3. The passage 212 is connected to a liquid reservoir 230 located at a level above the seal, via a non-return valve 231 so that liquid is thereby delivered from the reservoir 230 to the seal interface at a minimum pressure equal to the head of liquid.

An air operated double acting diaphragm pump 240 is connected between passage 212 and reservoir 230, in parallel with the non-return valve 231. A compressed air supply 241 is connected to pump 240 via an electro-pneumatic control valve 242 which controls the pressure of air delivered to the pump 240 in response to an electronic signal from the electronic control module 221. The pump 240 delivers liquid from reservoir 230 to passage 212 and hence to the seal interface, at a pressure equal to the pressure of air delivered to the pump 240.

The electronic control module 221 is microprocessor based and is programmed to compare the analogue signal from sensor 210 with prescribed limits. The control module 221 will then produce an output signal to control the electro-pneumatic control valve 242 so that the pressure of air delivered to pump 240 and hence pressure of liquid delivered to the seal interface will adjust the liquid film to maintain the temperature of the interface within the prescribed limits.

Instead of using the temperature of the seal interface to control the pressure of fluid delivered to passage 212, the system described above may utilise a sensor which measures the pressure of fluid retained by the seal, the control module 221 being programmed to adjust the pressure of liquid delivered to the seal interface relative to the pressure of fluid retained by the seal in prescribed manner. A sensor may also be provided to measure the pressure of liquid at the seal interface in order to provide positive feed back to the control module 221.

Instead of using an air operated double acting diaphragm pump 240 as described above, an air operated piston pump which will multiply the air pressure, may be used. Alternatively an air pressurised liquid reservoir may be used.

Various modifications may be made without departing from the invention. For example, while in the above embodiments annular grooves are provided in one of the seal face members in order to enhance fluid film formation, this is not essential, and the faces may be plane or have local rather than circumferential recesses. Furthermore, the circumferential or local recesses may be provided in the seal face member having a passage through which fluid is delivered to the sealing faces.

Although in the above embodiments single passages are provided for injection of fluid to the sealing faces, a plurality of angularly spaced passages may be provided for this purpose. While it is convenient to deliver fluid to the sealing faces through passages in the seal face member connected to the stationary component when said seal face member is axially fixed, the fluid may be delivered through passages in a rotating and/or axially movable seal face member, provided that suitable rotary and/or axially movable fluid connections are used.

In addition to controlling the pressure of fluid delivered to the sealing faces the sensing and control equipment may also be arranged to provide an indication of imminent seal failure or that the seal requires attention.

## Claims

1. A mechanical face seal for providing a fluid tight seal between a pair of relatively rotatable components (14, 21; 114, 121) comprising a first seal face member (10; 110; 210) mounted in fixed axial and rotational relationship and sealed with respect to one of the components (14; 114) and a second seal face member (25; 125) mounted in fixed rotational relationship and sealed with respect to the other component (21; 121), the second seal face member (25; 125) being movable axially towards the first seal face member (10; 110; 210) so that opposed sealing faces (30, 31; 140, 141) of the first and second seal face members (10, 25; 110, 125; 210) are urged into sealing engagement, a passage (41; 151; 212) being provided through one of the seal face members (10; 110; 210), said passage (41; 151; 212) opening to the sealing face (31; 141) of that seal face member (10, 110; 210) at a point intermediate of the radial extremities of the face (31; 141) engaged by the sealing face (30; 140) of the other seal face member (25; 125), the passage (41; 151; 212) being connected to an external source (50; 160; 240) of fluid under pressure, characterised in that sensing means (53, 54, 55; 161,162; 220) is provided for monitoring operating conditions at the interface between the first and second seal face members (10, 25; 110, 125; 210) and means (51; 56; 163, 160; 240, 242, 221) is provided for adjusting the pressure of fluid delivered via the passage (41; 151; 212) to the sealing faces (30, 31; 140, 141) as a function of the monitored operating conditions, to optimise the performance of the seal.

2. A mechanical face seal according to Claim 1 characterised in that a circumferentially extending recess (40) is provided in one of the sealing faces (30) at a radius equal to said passage opening (41).

3. A mechanical face seal according to Claim 1 or 2 characterised in that a plurality of passages (41) are provided to deliver fluid to the interface between the first and second seal face members (10, 25).

4. A mechanical face seal according to any one of Claims 1 to 3 characterised in that a first passage (41) is provided to deliver fluid to the interface between the first and second seal face members (10, 25), a second passage (41) is provided to permit removal of excess fluid from the interface between the first and second seal face members (10,25), an external source (50) of fluid under pressure being connected to the first passage (41) and a fluid control valve (51) being connected to the second passage (41), the fluid control valve (51) being controlled in response to operating conditions at the interface between the first and second seal face members (10, 25) to provide a back pressure sufficient to produce the appropriate fluid film.

5. A mechanical face seal according to Claim 4 characterised in that fluid from the fluid control valve (51) is passed through a third passageway (44) which extends between the outer and inner diameters of the seal face member (10), to flush the internal diameters of the first and second seal face members (10, 25).

6. A mechanical face seal according to any one of the preceding claims characterised in that the pressure of the external source (160; 240) of fluid is controllable.

7. A mechanical face seal according to any one of the preceding claims characterised in that a sensor (53; 161) is provided for measuring the pressure of fluid at the interface between the first and second seal face members (10, 25; 110, 125).

8. A mechanical face seal according to any one of the preceding claims characterised in that a sensor (54; 162) is provided for measuring the pressure of fluid retained by the seal, control means (51, 56; 160, 163) serving to adjust the pressure of fluid delivered to the sealing faces (30, 31; 140, 141) in response to variations in the pressure of the sealed fluid.

9. A mechanical face seal according to any one of the preceding claims characterised in that a sensor (55; 220) is provided for measuring the temperature of the sealing faces (30, 31), control means (56, 51; 240, 242, 221) serving to adjust the pressure of fluid delivered to the sealing faces (30, 31) in response to variations in the temperature of the sealing faces (30,31).

10. A mechanical face seal according to Claim 9 characterised in that the control means (240, 242, 221) serves to adjust the pressure of fluid delivered to the sealing faces (30, 31) to maintain the temperature of the sealing faces (30, 31) within predetermined limits.

## Patentansprüche

1. Gleitringdichtung zur Bereitstellung einer für Fluid dichten Abdichtung zwischen einem Paar relativ verdrehbarer Bestandteile (14, 21; 114, 121) mit einem ersten Gleitringdichtungselement (10; 110; 210), das bezöglich eines der Bestandteile (14; 114) axial feststehend und drehfest sowie abgedichtet befestigt ist, und einem zweiten Gleitringdichtungselement (25; 125), das bezüglich des anderen Bestandteils (21; 121) drehfest sowie abgedichtet befestigt ist, wobei das zweite Gleitringdichtungselement (25; 125) in Richtung auf das erste Gleitringdichtungselement (10; 110; 210) axial beweglich ist, so daß entgegengesetzte Dichtflächen (30, 31; 140, 141) des ersten und zweiten Gleitringdichtungselements (10, 25; 110, 125; 210) in abdichtenden Eingriff gedrängt werden, wobei ein Durchlaß (41; 151; 212) durch eines der Gleitringdichtungselemente (10; 110; 210) vorgeseben ist, wobei sich der Durchlaß (41; 151; 212) an der Dichtfläche (31; 141) des Gleitringdichtunselemente (10; 110; 210) an einem Punkt öffnet, der zwischen den radial äußereten Enden der Fläche (31; 141) liegt, die in Eingriff mit der Dichtfläche (30; 140) des anderen Gleitringdichtungselements (25; 125) ist, wobei der Durchlaß (41; 151; 212) an eine externe Quelle (50; 160; 240) unter Druck stehenden Fluids angeschlossen ist,
**dadurch gekennnzeichnet,** daß eine Meßvorrichtung (53, 54, 55; 161, 162; 220) zur Überwachung von Betriebsbedingungen an der Zwischenfläche zwischen dem ersten und zweiten Gleitringdichtungselement (10, 25; 110, 125; 210) und eine Vorrichtung (51; 56; 163, 160; 240, 242, 221) zur Einstellung des Drucks von Fluid vorgesehen sind, das über den Durchlaß (41; 151; 212) den Dichtflächen (30, 31; 140, 141) als Funktion der überwachten Betriebsbedingungen geliefert wird, um das Betriebsverhalten der Dichtung zu optimieren.

2. Gleitringdichtung gemäß Anspruch 1, dadurch gekennzeichnet, daß eine umranglich verlautende Aussparung (40) in einer der Dichtflächen (30) auf einem Radius vorgesehen ist, der dem der Durchlaßöffnung (41) entspricht.

3. Gleitringdichtung gemäß Anspruch 1 oder 2, dadurch gekennzeichnet, daß eine Vielzahl von Durchlässen (41) vorgesehen ist, um Fluid zu der Zwischenfläche zwischen dem ersten und zweiten Gleitringdichtungselement (10, 25) zu liefern.

4. Gleitringdichtung gemäß einem des Ansprüche 1 bis 3, dadurch gekennzeichnet, daß ein erster Durchlaß (41) vorgesehen ist, um Fluid zu der Zwinchenfläche zwischen dem ersten und zweiten Gleitringdichtungselement (10, 25) zu liefern, daß ein zweiter Durchlaß (41) vorgesehen ist, um Entfernung von Überschuß an Fluid von der Zwischenfläche zwischen dem ersten und zweiten Gleitringdichtungselement (10, 25) zu gestatten, wobei eine externe Quelle (50) von unter Druck stehendem Fluid an den ersten Durchlaß (41) angeschlossen ist, und ein Fluidregelventil (51) an den zweiten Durchlaß (41) angeschlossen ist, wobei das Fluidregelventil (51) in Reaktion auf Betriebsbedingungen an der Zwischenfläche zwischen dem ersten und zweiten Gleitringdichtungselement (10, 25) geregelt wird, um für einen Staudruck zu sorgen, der ausreicht, um einen geeigneten Fluidfilm zu erzeugen.

5. Gleitringdichtung gemäß Anspruch 4, dadurch gekennzeichnet, daß Fluid aus dem Fluidregelventil (51) durch einen dritten Durchlaß (44) geleitet wird, der sich zwischen dem Außen und Innendurchmesser des Gleitringdichtungselements (10) erstreckt, um die inneren Durchmesser des ersten und zweiten Gleitringdichtungselements (10, 25) zu spülen.

6. Gleitringdichtung gemäß einem der vohrergehenden Ansprüche, dadurch gekennzeichnet, daß der Druck der esternen Fluidquelle (160; 240) einstellbar ist.

7. Gleitringdichtung gemäß einem der vorhergehenden Ansprüche, dadurch gekennzeichnet, daß ein Sensor (53; 161) zum Messen des Fluidddrucks an der Zwischenfläche zwischen dem ersten und zweiten Gleitringdichtungselement (10, 25, 110, 125) vorgesehen ist.

8. Gleitringdichtung gemäß einem der vorhergehenden Ansprüche, dadurch gekennzeichnet, daß ein Sensor (54; 162) zum Messen des Fluiddrucks, der durch die Dichtung erhalten wird, vorgesehen ist, wobei Regelvorrichtung (51, 56; 160, 163) dazu dient, den Druck von zu den Dichtflächen (30, 31; 140, 141) gelieferten Fluid in Reaktion auf Veränderungen des Drucks des abgedichteten Fluids einzustellen

9. Gleitringdichtung gemäß einem der vorhergehenden Ansprüche, dadurch gekennzeichnet, daß ein Sensor (55; 220) zum Messen der Temperatur der Dichtflächen (30, 31) vorgesehen ist, wobei Regelvorrichtung (56, 51; 240, 242, 221) dazu diert, den Druck von zu den Dichtflächen (30, 31) gelieferten Fluid in Reaktion auf Veränderungen der Temperatur der Dichtflächen (30, 31) einzustellen.

10. Gleitringdichtung gemäß Anspruch 9, dadurch gekennzeichnet, daß die Regelvorrichtung (240, 242, 221) dazu dient, den Druck von zu den Dichtflächen (30, 31) gelieferten Fluid einzustellen, um die Temperatur der Dichtflächen (30, 31) innerhalb vorbestimmter Grenzen zu halten.

## Revendications

1. Garniture mécanique étanche de surface destinée à assurer l'étanchéité du fluide entre deux composants en rotation relative (14, 21 ; 114, 121) comprenant un premier élément de garniture étanche de surface (10; 110; 210) monté de façon à avoir une relation axiale et en rotation fixe et étanche par rapport à un des composants (14; 114) et un second élément de garniture étanche de surface (25 ; 125) monté de façon à avoir une relation de rotation fixe et étanche par rapport à l'autre composant (21 ; 121), le second élément de garniture étanche de surface (25 ; 125) pouvant se déplacer axialement vers le premier élément de garniture étanche de surface (10 ; 110 ; 210) de façon à ce que les faces d'étanchéité opposées (30, 31 ; 140, 141) des premier et second éléments de garniture étanche de surface (10, 25 ; 110, 125 ; 210) soient pressées pour s'accoupler de façon étanche, un passage (41 ; 151 ; 212) étant disposé à travers un des éléments de garniture de surface étanche (10 ; 110 ; 210), ledit passage (41 ; 151 ; 212) s'ouvrant sur la face d'étanchéité (31 ; 141) de cet élément de garniture étanche de surface (10 ; 110 ; 210) en un point intermédiaire par rapport aux extrémités radiales de la surface (31 ; 141) accouplée à la surface d'étanchéité (30 ; 140) de l'autre élément de garniture étanche de surface (25 ; 125), le passage (41 ; 151 ; 212) étant relié à une source extérieure (50 ; 160 ; 240) de fluide sous pression, caractérisée en ce que des moyens de détection (53, 54, 55 ; 161, 162 ; 220) sont disposés pour contrôler les conditions de fonctionnement à l'interface entre les premier et second éléments de garniture étanche de surface (10, 25 ; 110, 125 ; 210) et des moyens (51 ; 56 ; 163 ; 160 ; 240, 242, 221) sont disposés pour régler la pression du fluide fourni via le passage (41 ; 151 ; 212) aux surfaces d'étanchéité (30, 31 ; 140, 141) en fonction des conditions de fonctionnement observées, pour optimiser les performances de la garniture étanche.

2. Garniture mécanique étanche de surface selon la revendication 1, caractérisée en ce qu'une gorge s'étendant circonférentiellement (40) est disposée dans une des surfaces d'étanchéité (30) avec un rayon égal à ladite ouverture de passage (41).

3. Garniture mécanique étanche de surface selon la revendication 1 ou 2, caractérisée en ce que plusieurs passages (41) sont disposés de façon à fournir un fluide à l'interface entre les premier et second éléments de garniture étanche de surface (10, 25).

4. Garniture mécanique étanche de surface selon l'une quelconque des revendications 1 à 3, caractérisée en ce qu'un premier passage (41) est disposé pour fournir un fluide à l'interface entre les premier et second éléments de garniture étanche de surface (10, 25), un second passage est disposé pour pouvoir enlever le fluide en excès à l'interface entre les premier et second éléments de garniture étanche de surface (10, 25), une source extérieure (50) de fluide sous pression étant reliée au premier passage (41) et une vanne de commande de fluide (51) étant reliée au second passage (41), la vanne de commande de fluide (51) étant commandée en fonction des conditions de fonctionnement à l'interface entre les premier et second éléments de garniture étanche de surface (10, 25) pour fournir un reflux suffisant pour produire la couche de fluide adéquate.

5. Garniture mécanique étanche de surface selon la revendication 4, caractérisée en ce que le fluide provenant de la vanne de commande de fluide (51) passe à travers un troisième passage (44) qui s'étend entre les diamètres extérieur et intérieur de l'élément de garniture étanche de surface (10), de façon à rincer les diamètres intérieurs des premier et second éléments de garniture étanche de surface (10, 25).

6. Garniture mécanique étanche de surface selon l'une quelconque des revendications précédentes, caractérisée en ce que la pression de la source extérieure (160 ; 240) de fluide peut être commandée.

7. Garniture mécanique étanche de surface selon l'une quelconque des revendications précédentes, caractérisée en ce qu'un détecteur (53 ; 161) est disposé pour mesurer la pression du fluide à l'interface entre les premier et second éléments de garniture étanche de surface (10, 25 ; 110, 125).

8. Garniture mécanique étanche de surface selon l'une quelconque des revendications précédentes, caractérisée en ce qu'un détecteur (54 ; 162) est disposé pour mesurer la pression du fluide retenu par la garniture étanche, des moyens de commande (51, 56 ; 160, 163) servant à régler la pression du fluide fourni aux surfaces d'étanchéité (30, 31 ; 140, 141) en fonction des variations de pression du fluide.

9. Garniture mécanique étanche de surface selon l'une quelconque des revendications précédentes, caractérisée en ce qu'un détecteur (55 ; 220) est disposé pour mesurer la température des surfaces d'étanchéité (30, 31), des moyens de commande (56, 51 ; 240, 242, 221) servant à régler la pression de fluide fourni aux surfaces d'étanchéité (30, 31) en fonction des variations de température des surfaces d'étanchéité (30, 31).

10. Garniture mécanique étanche de surface selon la revendication 9, caractérisée en ce que les moyens de commande (240, 242, 221) servent à régler la pression de fluide fourni aux surfaces d'étanchéité (30, 31) pour maintenir la température des surfaces d'étanchéité (30, 31) dans des limites prédéterminées.
